# EUROPEAN PATENT APPLICATION

(11) **EP 4 300 636 A1**
(43) Date of publication of application: **03.01.2024**
(21) Application number: 22924567.5
(22) Date of filing: 09.05.2022
(51) Int. Cl.: H01M 4/66, H01M 10/0587

(54) **POLE PIECE, BATTERY CELL, BATTERY AND ELECTRICAL APPARATUS**

(71) Applicant: Contemporary Amperex Technology Co., Limited, Ningde, Fujian 352100 (CN)
(72) Inventor: CHAI, Zhisheng, Ningde, Fujian 352100 (CN); HE, Changsheng, Ningde, Fujian 352100 (CN); JIN, Haizu, Ningde, Fujian 352100 (CN)
(74) Representative: Rowlands, Stuart Michael
(86) International application number: PCT/CN2022/091801
(87) International publication number: WO 2023/216076

(57) **Abstract**

An electrode plate, a battery cell, a battery and an electrical device are provided in the embodiments of the present application. The electrode plate comprises an insulating substrate, a conductive layer, and an active material layer. The conductive layer is arranged on the surface of the insulating substrate. The active material layer is applied on the surface of the conductive layer away from the insulating substrate, the conductive layer comprising a first part coated with the active material layer and a second part not coated with the active material layer, and the first part and the second part are arranged along the first direction. The conductive layer has a resistivity of ρ1, a specific heat capacity of C, a density of ρ2, and a constant K=ρ1/(C·ρ2). The conductive layer has a thickness of d1, the first part has a size of W along the first direction, and d1, W and K satisfy: 0.001 J/(Ω·mm⁴·°C)≤d1/(K·W)≤0.0075 J/(Ω·mm⁴·°C). In the present application, the value of d1/(K·W) is limited to 0.001 J/(Ω·mm⁴·°C)-0.0075 J/(Ω·mm⁴°C) to balances energy density and cycle performance of the battery cell.

## Description

### TECHNICAL FIELD

The present application relates to the field of battery technology, and more specifically, to an electrode plate, a battery cell, a battery and an electrical device.

### BACKGROUND

Battery cells are widely used in electronic equipment, such as mobile phones, laptop computers, battery cars, electric cars, electric airplanes, electric ships, electric toy cars, electric toy ships, electric toy airplanes and electric tools, etc. The battery cells may include nickel-cadmium battery cells, nickel-hydrogen battery cells, lithium-ion battery cells, secondary alkaline zinc-manganese battery cells, and the like.

In the development of battery technology, how to improve the safety of battery cells is one research direction in battery technology.

### SUMMARY

The present application provides an electrode plate, a battery cell, a battery and an electrical device, which can improve the safety of the battery cell.

In a first aspect, the embodiments of the present application provide an electrode plate, comprising an insulating substrate, a conductive layer, and an active material layer. The conductive layer is arranged on the surface of the insulating substrate. The active material layer is applied on the surface of the conductive layer away from the insulating substrate, the conductive layer comprising a first part coated with the active material layer and a second part not coated with the active material layer, and the first part and the second part are arranged along the first direction. The conductive layer has a resistivity of ρ1, a specific heat capacity of C, a density of ρ2, and a constant K=ρ1/(C·ρ2). The conductive layer has a thickness of d1, the first part has a size of W along the first direction, and d1, W and K satisfy: 0.001J/(Q·mm⁴·°C)≤d1/(K·W)≤0.0075 J/(Ω·mm⁴·°C).

In the above technical solution, the conductive layer has a relatively small thickness, so when the conductive layer is pierced by an external structure, the conductive layer will generate smaller burrs at the pierced position, which can reduce the risk of burrs piercing the separator, thereby reducing the possibility of short circuit and improving the safety of the battery cell.

The smaller value of d1/(K·W) results in the conductive layer generating more heat during charging and discharging, higher temperature, faster aging of the active material layer applied on the conductive layer, and thus the faster decrease in capacity of the battery cell. If d1/(K·W) is too large, the thickness d1 of the conductive layer will be overdesigned, resulting in low energy density of the battery cell. In the above technical solution, the value of d1/(K·W) is limited to 0.001J/(Ω·mm⁴·°C)-0.0075 J/(Ω·mm⁴°C) to balance the energy density and cycle life of the battery cell.

In some embodiments, d1, W and K satisfy: 0.002 J/(Ω·mm⁴·°C)≤d1/(K·W)≤0.003 J/(Ω·mm⁴·°C).

In some embodiments, d1 is 0.5 µm-5 µm.

In some embodiments, the electrode plate further comprises a tab, which is welded to the second part to form a first welding portion; in the first direction, the end of the tab facing away from the active material layer protrudes from the second part. The part of the tab protruding from the second part in the first direction can be used for connecting with the electrode lead-out structure of the battery cell.

In some embodiments, the tab has a thickness of is d2, and d2 is greater than d1. The thickness of the tab is greater than that of the conductive layer, so as to improve the current carrying capability of the tab.

In some embodiments, d2 is 1 µm-100 µm.

The smaller d2 is, the smaller the current carrying area of the tab is, and the weaker the current carrying capability is. The larger d2 is, the larger the volume and weight of the tab is, the more heat generated by the welding of the tab and the conductive layer, and the more prone to poor welding between the tab and the conductive layer. In the above technical solution, the value of d2 is limited to 1 µm-100 µm, so that the tab meets the current carrying requirement meanwhile reducing the heat generated by the tab during welding.

In some embodiments, the electrode plate further comprises an adhesive layer connected to the tab and covering at least part of the first welding portion.

In the above technical solution, the adhesive layer can fix at least part of the particles on the first welding portion, thereby reducing the risk of particles falling into the electrode assembly and improving safety.

In some embodiments, a part of the adhesive layer is located between the active material layer and the tab in the first direction, applied on the second part, and connected to the active material layer.

In the above technical solution, the adhesive layer is connected to the active material layer, and can cover the connection between the first part and the second part, reduce the risk of cracking of the conductive layer, and ensure the current carrying capability of the conductive layer. The adhesive layer is also able to connect the tab to the conductive layer and the active material layer, thereby reducing the risk of detachment of the tab.

In some embodiments, the electrode plate further comprises an insulating layer, at least part of the insulating layer is located on a side of the adhesive layer away from the first welding portion and is connected to the adhesive layer.

In the above technical solution, the insulating layer can protect the adhesive layer, reduce the risk of short circuit caused by the welding portion piercing the adhesive layer, and thus improve safety. The insulating layer can also improve the insulation of the electrode plate and reduce the risk of short circuit caused by lap joint between the positive and negative electrode plates. The adhesive layer is also able to connect the insulating layer to the tab to reduce the risk of detachment of the insulating layer.

In some embodiments, both the insulating layer and the adhesive layer comprise an adhesive, the weight ratio of the adhesive in the insulating layer to the insulating layer is N1, and the weight ratio of the adhesive in the adhesive layer to the adhesive layer is N2, and N1 is smaller than N2.

In the above technical solution, the amount of the adhesive in the adhesive layer is relatively high, which allows better bonding to the first welding portion and reduces the risk of separation of the adhesive layer from the first welding portion. The insulating layer is not necessarily connected with the first welding portion, and the insulating layer can contain less adhesive, so that the insulating layer can be provided with more high-strength materials to improve the overall strength of the insulating layer.

In some embodiments, the insulating layer completely covers the adhesive layer, so as to reduce the exposed area of the adhesive layer and reduce the risk of separation of the adhesive layer from the first welding portion during immersion in the electrolyte.

In some embodiments, the electrode plate further comprises an insulating layer connected to the tab and the active material layer and covering at least part of the first welding portion.

In the above technical solution, the insulating layer can fix at least part of the particles on the first welding portion, thereby reducing the risk of particles falling into the electrode assembly and improving safety.

In some embodiments, the insulating layer comprises ceramic particles and an adhesive, and the weight ratio of the adhesive to the insulating layer is greater than or equal to 0.1. The amount of the adhesive in the insulating layer is relatively high, which allows better bonding to the first welding portion and reduces the risk of separation of the insulating layer from the first welding portion.

In some embodiments, in the first direction, the part of the tab protruding from the conductive layer is not coated with an insulating layer, so as to reduce the risk of interference between the insulating layer and the electrode lead-out structure.

In some embodiments, the tab includes a plurality of tab portions arranged at intervals along a second direction, and the second direction is perpendicular to the first direction and the thickness direction of the electrode plate. In the first direction, the tab portions protrude from the second part.

In the above technical solution, the tab is divided into a plurality of separate tab portions, which facilitates the bending of the tab portions after the electrode plate is wound.

In a second aspect, the embodiments of the present application provide a battery cell, comprising a casing, an electrode assembly, and an electrode lead-out structure. The electrode assembly is accommodated in the casing. The electrode assembly comprises the electrode plate according to any embodiment of the first aspect. The electrode lead-out structure is arranged on the casing and connected to the tab.

In some embodiments, two conductive layers are provided on two sides of the insulating substrate, respectively. The tab comprises a first tab and a second tab, and the first tab and the second tab are welded to the second parts of the two conductive layers, respectively. The first tab and the second tab are used to lead out the current on the two conductive layers, respectively.

In some embodiments, the electrode lead-out structure has a connecting portion, and in the first direction, the connecting portion is located on the side of the first tab away from the active material layer, and the connecting portion abuts against and is welded to the first tab, and abuts against and is welded to the second tab. The connecting portion has a thickness of t, and the size of the first tab in the flattened state protruding beyond the first welding portion along the first direction is h2, and t and h2 satisfy: 2.5≤h2/t≤10. The size of the second tab in the flattened state protruding beyond the first welding portion along the first direction is h3, and t and h3 satisfy: 2.5≤h3/t≤10.

In the above technical solution, the larger h2 is, the larger the part of the first tab that can be welded to the connecting portion is, but the space occupied by the first tab is also larger; the smaller the value of t, the less heat generated by welding, the lower the connection strength between the first tab and the connecting portion, the smaller the current carrying capability of the connecting portion. The smaller h2 is, the smaller the part of the first tab that can be welded to the connecting portion is, but the space occupied by the first tab is also smaller; the larger the value of t, the more heat generated by welding, the more heat transferred to the first tab and separator, the higher the risk of the burned tab and separator. In the above technical solution, the value of h2/t is limited to 2.5-10 to ensure the connection strength between the connecting portion and the first tab, reduce the risk of the first tab being melted through, and increase the energy density. Similarly, in the above technical solution, the value of h3/t is limited to 2.5-10, to ensure the connection strength between the connecting portion and the second tab, reduce the risk of the second tab being melted through, and increase the energy density.

In some embodiments, in the first direction, the end of the first tab away from the active material layer protrudes beyond the second tab, and the second tab is bent toward the first tab and connected to the first tab. The electrode lead-out structure has a connecting portion, and in the first direction, the connecting portion is located on the side of the first tab away from the active material layer, and the connecting portion abuts against and is welded to the first tab. The connecting portion has a thickness of t, and the size of the first tab in the flattened state protruding beyond the first welding portion along the first direction is h2, and t and h2 satisfy: 5≤h2/t≤20.

The second tab is not welded to the connecting part, so in the above technical solution, the value of h2/t is limited to 5-20, to ensure the connection strength between the connecting portion and the first tab, reduce the risk of the first tab being melted through, and increase the energy density. Compared with the solution in which the first tab and the second tab are welded to the connecting portion at the same time, the solution in which only the first tab is welded to the connecting portion requires a larger h2 of the first tab.

In some embodiments, the electrode plate is wound in a plurality of turns (cycles). In the radial direction of the electrode assembly, the distance between two adjacent turns (cycles) of the electrode plate is d3, and 0.2mm≤d3≤0.4mm.

In the above technical solution, the electrode plate is wound in a plurality of turns (cycles), and correspondingly, the tabs are also wound in multiple turns (cycles). The higher the value of d3, the higher the distance between two adjacent turns (cycles) of tabs, and the higher the risk of laser passing between the tabs during the welding of the tabs and the electrode lead-out structure. If the value of d3 is too high, the separator of the electrode assembly may be burned by the laser, causing a safety risk. Therefore, in the above technical solution, the value of d3 may be limited to be less than or equal to 0.4 mm to improve safety.

In some embodiments, the electrode lead-out structure has a connecting portion, and in the first direction, the connecting portion is located on the side of the tab away from the active material layer, and the connecting portion abuts against and is welded to the tab. The electrode assembly also includes a separator, which is laminated and wound with the electrode plates. In the first direction, the minimum distance between the surface of the connecting portion abutting against the first tab and the separator is S 1, the thickness of the connecting portion is t, and S1≥0.75t.

The higher the value of t, the greater the heat generated by the welding connecting portion and the first tab; the smaller S1, the shorter the heat conduction path between the separator and the connecting portion, and the more the heat conducted to the separator, resulting in too high risk of the separator being burned. In the above technical solution, S1 may be limited to be greater than or equal to 0.75t, so as to reduce the heat conducted to the separator and reduce the risk of the separator being burned.

In some embodiments, the tab is wound in a plurality of turns (cycles) along the winding direction, and the end of the tab in a plurality of turns (cycles) facing away from the active material layer is flattened to form an end surface, and the electrode lead-out structure is welded to the end surface.

In some embodiments, the electrode plate is wound in a plurality of turns (cycles) along the winding direction. The tab comprises a plurality of tab portions arranged at intervals along the winding direction, the plurality of tab portions are bent toward the winding center of the electrode plate to form an end surface, and the electrode lead-out structure is welded to the end surface.

In a third aspect, the embodiments of the present application provide a battery, comprising a plurality of battery cells according to any one of the embodiments of the second aspect.

In a fourth aspect, the embodiments of the present application provide an electrical device, comprising the battery cell according to any one of the embodiments of the second aspect, and the battery cell is used to provide electric energy.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the drawings without creative work.
Fig. 1 is a schematic structural diagram of a vehicle provided by some embodiments of the present application.
Fig. 2 is a schematic exploded diagram of a battery according to some embodiments of the present application.
Fig. 3 is a schematic structural diagram of the battery module shown in Fig. 2.
Fig. 4 is a schematic exploded diagram of a battery cell provided by some embodiments of the present application.
Fig. 5 is a partial cross-sectional schematic diagram of a battery cell provided by some embodiments of the present application.
Fig. 6 is a schematic structural diagram of an electrode assembly of a battery cell provided by some embodiments of the present application.
Fig. 7 is a schematic structural diagram of an electrode plate provided by some embodiments of the present application.
Fig. 8 is a cross-sectional schematic diagram of the electrode plate shown in Fig. 7 along line A-A.
Fig. 9 is a cross-sectional schematic diagram of an electrode plate provided by some embodiments of the present application.
Fig. 10 is a cross-sectional schematic diagram of an electrode plate provided by some other embodiments of the present application.
Fig. 11 is a partial structural schematic diagram of a battery cell provided by some embodiments of the present application.
Fig. 12 is a cross-sectional schematic diagram of an electrode plate provided by yet some embodiments of the present application.
Fig. 13 is a partial structural schematic diagram of a battery cell provided by some embodiments of the present application.
Fig. 14 is a schematic structural diagram of an electrode plate in the unfolded state provided by some further embodiments of the present application.
Fig. 15 is a partial schematic diagram of a battery cell provided by some embodiments of the present application.

In the particular embodiments of drawings, the reference signs are as follows:
1. Vehicle; 2. battery; 3. controller; 4. motor; 5. box body; 5a, first box body portion; 5b, second box body portion; 5c. accommodating space; 6. battery module; 7. battery cell; 10, electrode assembly; 11, electrode plate; 111, insulating substrate; 112, conductive layer; 112a, first part; 112b, second part; 113, active material layer; 114, tab; 114a, first tab; 114b, second tab; 114c, end surface; 114d, tab portion; 115, first welding portion; 116, adhesive layer; 117, insulating layer; 11a, first electrode plate; 11b, second electrode plate; 12, separator; 20, casing; 21, casing body; 22, end cover; 30, electrode lead-out structure; 31, electrode terminal; 32, current collecting member; 33, connecting portion; V, winding direction; X, the first direction; Y, the second direction; Z, the thickness direction.

### DETAILED DESCRIPTION

In order to make the purpose, technical solutions and advantages of the embodiments of the present application clearer, the technical solutions in the embodiments of the present application will be clearly described below in conjunction with the accompanying drawings in the embodiments of the present application. It will be apparent that the described embodiments are some of the examples of the present application, not all of them. Based on the embodiments in this application, all other embodiments obtained by a person of ordinary skill in the art without creative efforts fall within the protection scope of this application.

Unless otherwise defined, all technical and scientific terms used in this application have the same meaning as commonly understood by those skilled in the technical field of this application; the terms used in this application in the description of the application are only to describe specific embodiments, and is not intended to limit the present application; the terms "comprising" and "having" and any variations thereof in the description and claims of the present application and the above description of drawings are intended to cover non-exclusive inclusion. The terms "first", "second" and the like in the description and claims of the present application or the above drawings are used to distinguish different objects, rather than to describe a specific sequence or primary-subordinate relationship.

Reference in this application to an "embodiment" and "embodiments" means that a particular feature, structure, or characteristic described in connection with the embodiment may be included in at least one embodiment of the application. The occurrences of these phrases in various places in the specification are not necessarily all referring to the same embodiment, nor are separate or alternative embodiments mutually exclusive of other embodiments.

In the description of this application, it should be noted that, unless otherwise clearly stipulated and limited, the terms "install", "connected", "connect", "attach", "installation", "connection" and "attachment" should be understood in a broad sense, for example, it may be a fixed connection, a detachable connection or integral connection; or it may be a direct connection or indirect connection through an intermediary, or it may be internal communication between two components. Those of ordinary skill in the art can understand the specific meanings of the above terms in this application according to specific situations.

The term "and/or" in this application is merely a description of the associated relationship of associated objects, representing that three relationships may exist, for example, A and/or B may be expressed as including the three instances of A alone, A and B simultaneously, and B alone. In addition, the character "/" in this application generally indicates that the associated objects before and after the character are in a relationship of "or".

In the embodiments of the present application, the same reference numerals denote the same components, and for the sake of brevity, the detailed descriptions of the same components are omitted in different embodiments. It should be understood that the dimensions, such as thickness, length and width, of various components in the embodiments of the application shown in the drawings, as well as the dimensions, such as overall thickness, length and width of an integrated device are for illustrative purposes only, and should not constitute any limitation to the application.

"A plurality of" or "multiple" appearing in the present application means two or more (including two).

The term "parallel" in this application includes not only the absolutely parallel situation, but also the roughly parallel situation that is generally recognized in engineering; at the same time, the "perpendicular" not only includes the absolutely perpendicular situation, but also includes the roughly perpendicular situation that is conventionally recognized in engineering.

In this application, the battery cell may comprise a lithium-ion secondary battery cell, a lithium-ion primary battery cell, a lithium-sulfur battery cell, a sodium-lithium-ion battery cell, a sodium-ion battery cell or a magnesium-ion battery cell, or the like, which is not limited in the embodiments of the present application. The battery cell can be in the form of a cylinder, a flat body, a cuboid or other shapes, which is not limited in the embodiments of the present application.

The battery mentioned in the embodiments of the present application refers to a single physical module including one or more battery cells to provide higher voltage and capacity. Batteries may also generally include a box body for encapsulating one or more battery cells. The box body can prevent liquid or other foreign objects from affecting the charging or discharging of the battery cells.

The battery cell comprises electrode assembly and electrolyte, and the electrode assembly comprises a positive electrode plate, a negative electrode plate, and a separator. A battery cell works primarily by moving metal ions between the positive and negative electrode plates. The positive electrode plate comprises a positive current collector and a positive active material layer applied on a surface of the positive current collector. Taking a lithium-ion battery as an example, the material of the positive electrode current collector can be aluminum, and the positive electrode active material layer comprises the positive electrode active material which may be lithium cobalt oxides, lithium iron phosphate, ternary lithium, lithium manganate or the like. The negative electrode plate comprises a negative electrode current collector and a negative electrode active material layer applied on a surface of the negative electrode current collector. The material of the negative electrode current collector may be copper, the negative electrode active material layer includes the negative electrode active material, and the negative electrode active material may be carbon or silicon. The material of the separator may be polypropylene (PP), polyethylene (PE), or the like.

In a battery cell, current collector (such as positive electrode current collector or negative electrode current collector) is an integral part, and it not only functions as carrying the active material, but also gathers the electrons generated by the electrochemical reaction and guides them to the external circuit, so as to realize the process of converting chemical energy into electrical energy.

In the related technologies, the current collector generally is made of metal foil, however, the metal foil has a relatively large weight, which restricts the further improvement of the energy density of a battery cell. During the use of a battery cell, when the current collector of the electrode plate is pierced by an external structure, the current collector will produce burrs at the pierced position, and the burrs will easily pierce the separator and cause the connection between the positive and negative electrodes, resulting in the internal short circuit of the battery cell and leading to the risk of fire and explosion of the battery cell.

In order to improve safety, the inventors designed an electrode plate that adopts a current collector with a multi-layer structure. Specifically, the current collector may include an insulating substrate and a conductive layer disposed on the surface of the insulating substrate, and the active material layer of the electrode plate may be applied on the surface of the conductive layer away from the insulating substrate. The conductive layer can gather the electrons generated by the electrochemical reaction and guide them to the external circuit. With the same thickness, compared with the current collector made of metal foil, the current collector with multi-layer structure including the insulating substrate has a smaller weight, thereby further improving the energy density of the battery cell. The conductive layer has a relatively small thickness, so when the current collector is pierced by an external structure, the conductive layer will generate smaller burrs at the pierced position, which can reduce the risk of burrs piercing the separator, thereby reducing the possibility of short circuit and improving the safety of the battery cell.

The inventor has noticed that although the current collector with a multi-layer structure reduces the thickness of the conductive layer, the reduction of the thickness of the conductive layer will also reduce the current carrying capability of the conductive layer; and if the thickness of the conductive layer is too small, it will cause serious heat generation of the conductive layer, which affects the cycle life of the battery cell.

In view of this, the embodiments of the present application provide an electrode plate, in which the thickness of the conductive layer is adjusted in combination with the current-carrying capability of the conductive layer and the size of the electrode plate, so as to reduce the thickness of the conductivity layer while meeting the current-carrying requirements of the conductive layer, thereby prolonging the cycle life of the battery cell and increasing the energy density of the battery cell.

The electrode plates described in the embodiments of the present application are suitable for battery cells, batteries, and electrical devices using batteries.

Electrical devices can be vehicles, mobile phones, portable devices, notebook computers, ships, spacecrafts, electric toys and electric tools, and so on. Vehicles may be fuel vehicles, gas vehicles or new energy vehicles; the new energy vehicles may be pure electric vehicles, hybrid vehicles or extended-range vehicles and the like; the spacecrafts include airplanes, rockets, aerospace planes and spaceships, etc.; the electric toys include stationary or mobile electric toys, such as game consoles, electric car toys, electric ship toys and electric airplane toys, etc.; the electric tools include metal cutting electric tools, grinding electric tools, assembly electric tools and railway electric tools, for example, electric drills, electric grinders, electric wrenches, electric screwdrivers, electric hammers, impact drills, concrete vibrators, electric planers, and the like. The above-mentioned electrical devices are not specifically limited in the embodiments of the present application.

For the convenience of description, in the following embodiments, a vehicle is taken as an example of electrical device for description.

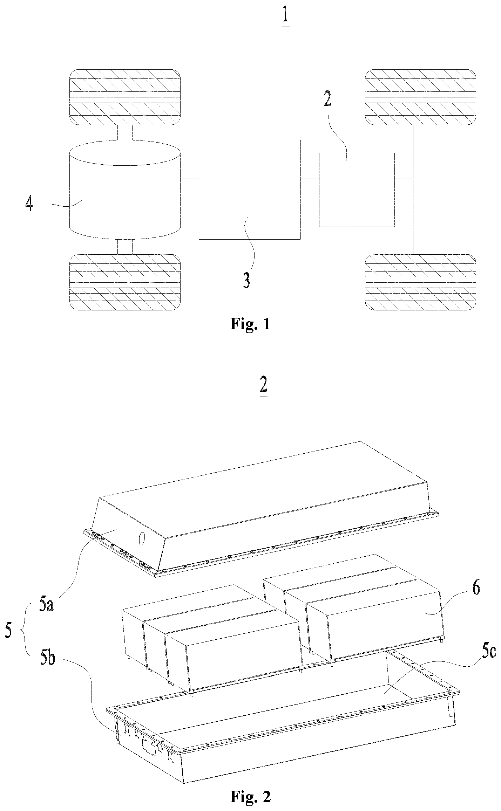

Fig. 1 is a schematic structural diagram of a vehicle provided by some embodiments of the present application.

As shown in Fig. 1, a battery 2 is provided inside the vehicle 1, and the battery 2 may be provided at the bottom, head or tail of the vehicle 1. The battery 2 may be used for power supply of the vehicle 1, for example, the battery 2 may be used as an operating power source of the vehicle 1.

The vehicle 1 may further comprise a controller 3 and a motor 4, and the controller 3 is used to control the battery 2 to supply power to the motor 4, for example, to satisfy the operating power demands during starting, navigating and running of the vehicle 1.

In some embodiments of the present application, the battery 2 can not only be used as an operating power source for the vehicle 1, but can also be used as a driving power source for the vehicle 1, in place of or partially in place of fuel or natural gas, to provide driving power for the vehicle 1.

Fig. 2 is a schematic exploded diagram of a battery according to some embodiments of the present application.

As shown in Fig. 2, the battery 2 includes a box body 5 and a battery cell (not shown in Fig. 2), and the battery cell is accommodated in the box body 5.

The box body 5 is used to accommodate the battery cells, and the box body 5 may have various structures. In some embodiments, the box body 5 may include a first box body part 5a and a second box body part 5b, the first box body part 5a and the second box body part 5b cover each other, and the first box body part 5a and the second box body part 5b jointly define an accommodating space 5c for accommodating the battery cells. The second box body part 5b may be a hollow structure with an end open, the first box body part 5a has a plate-shaped structure, and the first box body part 5a covers an open side of the second box body part 5b to form a box body 5 with an accommodating space 5c; the first box body portion 5a and the second box body portion 5b may also have a hollow structure with an open side, and the open side of the first box body part 5a covers the open side of the second box body part 5b, to form a box body 5 with an accommodating space 5c. Certainly, the first box body part 5a and the second box body part 5b may have various shapes, such as a cylinder, a cuboid, and the like.

In order to improve sealing performance after the connection of the first box body part 5a and the second box body part 5b, a sealing member, such as sealant and sealing ring, may also be arranged between the first box body part 5a and the second box body part 5b.

Assuming that the first box part 5a covers the top of the second box part 5b, the first box part 5a may also be referred to as an upper box cover, and the second box part 5b may also be called the lower box body.

In the battery 2, there may be one or more battery cells. If multiple battery cells are provided, the multiple battery cells may be in series connection or parallel connection or series-parallel connection. The series-parallel connection means that some of multiple battery cells are in series connection and some are in parallel connection. Multiple battery cells may be direct in series connection or in parallel connection or in series-parallel connection, and then a whole composed of the multiple of battery cells is accommodated in the box body 5; certainly, multiple battery cells may be first in series connection or parallel connection or series-parallel connection to form a battery modules 6, and then multiple battery modules 6 may be in series connection or parallel connection or series-parallel connection to form a whole, and are accommodated in the box body 5.

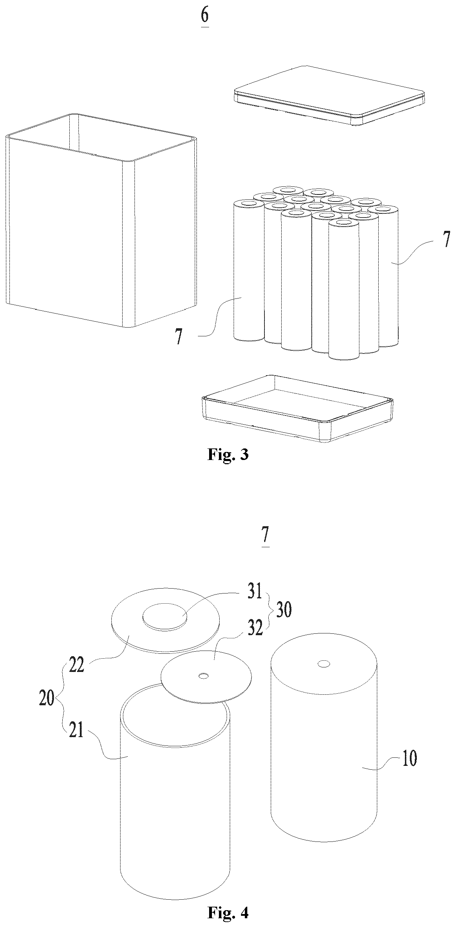

Fig. 3 is a schematic structural diagram of the battery module shown in Fig. 2.

In some embodiments, as shown in Fig. 3, multiple battery cells 7 are provided, and the multiple battery cells 7 are connected in series, in parallel, or in series-parallel to form a battery module 6. Then multiple battery modules 6 are connected in series, in parallel or in series-parallel to form a whole, and are accommodated in the box body.

The multiple battery cells 7 in the battery module 6 may be electrically connected through a bus component, so as to realize parallel connection, series connection or series-parallel connection of the multiple battery cells 7 in the battery module 6.

The battery cell 7 may be a cylindrical battery cell, a square battery cell or a battery cell of other shapes.

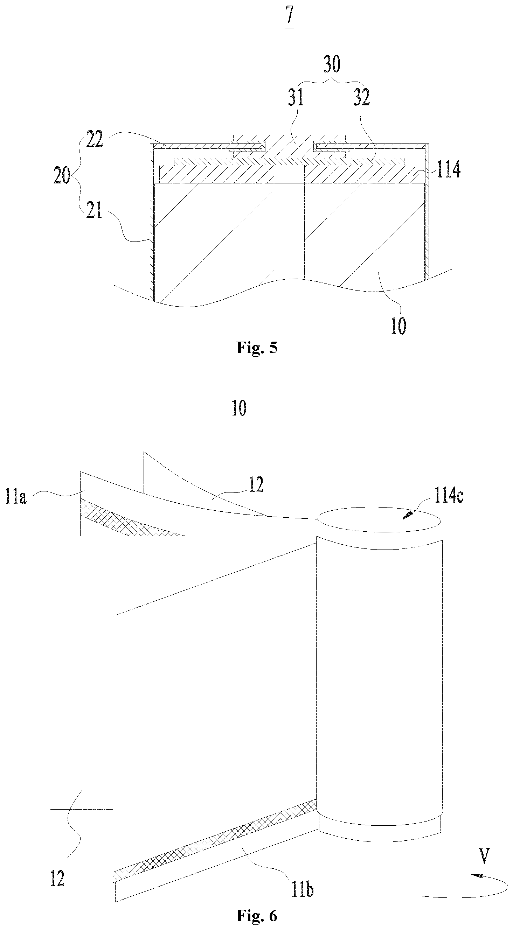

Fig. 4 is a schematic exploded diagram of a battery cell provided by some embodiments of the present application; Fig. 5 is a partial cross-sectional schematic diagram of a battery cell provided by some embodiments of the present application; Fig. 6 is a schematic structural diagram of an electrode assembly of a battery cell provided in some embodiments of the present application.

As shown in Figs. 4 to 6, an embodiment of the present application provides a battery cell 7, comprising a casing 20 and an electrode assembly 10 accommodated in the casing 20.

The casing 20 has a hollow structure, and an accommodating cavity for accommodating the electrode assembly 10 and electrolyte is formed inside. The shape of the casing 20 may be determined according to the specific shape of the electrode assembly 10. For example, if the electrode assembly 10 has a cylindrical structure, a cylindrical casing may be used; if the electrode assembly 10 has a cuboid structure, a cuboid casing may be used. Optionally, both the electrode assembly 10 and the casing 20 are cylindrical.

In some embodiments, the casing 20 includes a casing body 21 and an end cover 22, the casing body 21 has an opening, and the end cover 22 is connected to the casing body 21 and is used to cover the opening.

The end cover 22 is sealingly connected with the casing body 21 to form a sealed space for accommodating the electrode assembly 10 and the electrolyte. In some examples, one end of the casing body 21 has an opening, and end cover 22 is provided to cover the opening of the casing body 21. In some other examples, opposite ends of the casing body 21 have openings, and two end covers 22 are provided, and the two covers 22 cover the two openings of the casing body 21, respectively.

In some embodiments, the electrode assembly 10 comprises an electrode plate and a separator 12. As an example, there are multiple electrode plates, comprising a first electrode plate 11a and a second electrode plate 11b with opposite polarities, and the separator 12 is used to insulate and isolate the first electrode plate 11a and the second electrode plate 11b. An electrode assembly 10 works primarily by moving metal ions between the first electrode plate 11a and the second electrode plate 11b.

One of the first electrode plate 11a and the second electrode plate 11b is a positive electrode plate, and the other of the first electrode plate 11a and the second electrode plate 11b is a negative electrode plate.

In some embodiments, the first electrode plate 11a, the second electrode plate 11b, and the separator 12 are all strip-shaped structures, and the first electrode plate 11a, the second electrode plate 11b, and the separator 12 are wound around the central axis as a whole and form a wound structure. The wound structure may be a cylindrical structure, a flat structure or a structure of other shapes.

In some embodiments, the battery cell 7 further comprises an electrode lead-out structure 30 disposed on the casing 20 and used for electrical connection with the electrode assembly 10, so as to lead out electric energy generated by the electrode assembly 10.

In some embodiments, the electrode lead-out structure 30 comprises an electrode terminal 31, at least part of the electrode terminal 31 is exposed to the outside of the casing 20 to realize electrical connection with other structures (such as a bus component).

In some embodiments, at least part of the electrode terminal 31 is accommodated in the casing 20 and directly connected to the electrode plate, for example, the electrode terminal 31 is welded to the electrode plate.

In some other embodiments, the electrode lead-out structure 30 further comprises a current collecting member 32 used for connecting the electrode plate and the electrode terminal 31. As an example, during assembling, the first electrode plate 11a may be welded to the current collecting member 32 first, and then the current collecting member 32 is welded to the electrode terminal 31.

In yet other embodiments, the electrode lead-out structure 30 may be integrated with the casing 20. For example, the electrode lead-out structure 30 is integrated with the end cover 22, and the first electrode plate 11a may be directly welded to the end cover 22.

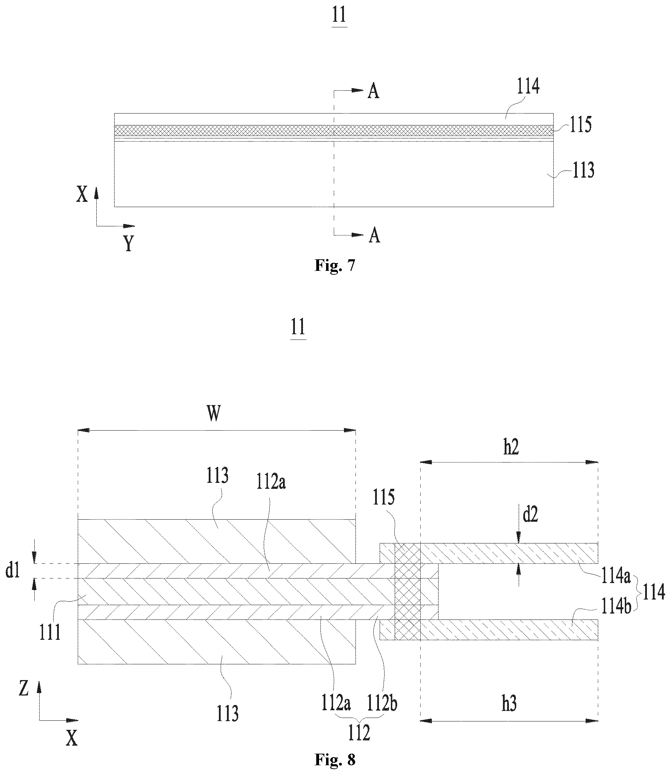

Fig. 7 is a schematic structural diagram of an electrode plate provided by some embodiments of the present application. Fig. 8 is a cross-sectional schematic diagram of the electrode plate shown in Fig. 7 along line A-A.

As shown in Fig. 7 and Fig. 8, the electrode plate 11 of the embodiment of the present application comprises an insulating substrate 111, a conductive layer 112 and an active material layer 113. The conductive layer 112 is arranged on the surface of the insulating substrate 111. The active material layer 113 is applied on the surface of the conductive layer 112 away from the insulating substrate 111, the conductive layer 112 comprising a first part 112a coated with the active material layer 113 and a second part 112b not coated with the active material layer 113, and the first part 112a and the second part 112b are arranged along the first direction X. The conductive layer 112 has a resistivity of ρ1, a specific heat capacity of C, a density of ρ2, and a constant K=ρ1/(C·ρ2). The conductive layer 112 has a thickness of d1, the first part 112a has a size of W along the first direction X, and d1, W and K satisfy: 0.001 J/(Ω·mm⁴·°C)≤d1/(K·W)≤0.0075 J/(Ω·mm⁴·°C).

In the embodiment of the present application, the conductive layer 112 may be disposed on surface of one side of the insulating substrate 111, or may be disposed on two opposite sides of the insulating substrate 111. In the embodiments of the present application, the thickness d1 refers to the thickness of the conductive layer 112 on a surface of one side of the insulating substrate 111. For example, the conductive layers 112 are disposed on both surfaces of the insulating substrate 111, then each thickness of the conductive layers 112 on both surfaces is d1.

The electrode plate 11 in this embodiment may be a positive electrode plate in the electrode assembly 10 or a negative electrode plate in the electrode assembly 10.

For example, conductive layers 112 are disposed on both sides of the insulating substrate 111, and the surface of each conductive layer 112 is coated with an active material layer 113.

The surface of the first part 112a facing away from the insulating substrate 111 is covered by the active material layer 113, and the surface of the second part 112b facing away from the insulating substrate 111 is not covered by the active material layer 113. The surface of the second part 112b facing away from the insulating substrate 111 may be exposed, or may be coated with other coatings that do not contain active materials.

The active material layer 113 is used for electrochemistry with the electrolyte to generate electric current. The first part 112a can gather the generated electric current and lead the electric current to an external circuit through the second part 112b.

For example, the size of the active material layer 113 along the first direction X is the same as the size of the first part 112a along the first direction X.

The current carrying capability of the conductive layer 112 is related to the resistivity ρ1, specific heat capacity C and density ρ2 of the conductive layer 112. Specifically, the smaller the K value, the higher the current carrying capability of the conductive layer 112; the higher the K value, the weaker the current carrying capability of the conductive layer 112.

The smaller the value of d1, the greater the resistance of the conductive layer 112, and the higher the heat generated when the current passes; the higher the K value, the weaker the current carrying capability of the conductive layer 112.

During the charging and discharging process, the first part 112a gathers the current generated by the active material layer 113 and conducts the current to the second part 112b. The current collected in the region of the first part 112a away from the second part 112b needs to pass through the region of the first part 112a close to the second part 112b to flow to the second part 112b. Therefore, in the charging and discharging process, the current flowing through the area of the first part 112a close to the second part 112b is relatively large, and the heat generation in the area of the first part 112a close to the second part 112b is relatively large. The higher the W value, the larger the capacity of the active material layer 113, the larger the current generated by the active material layer 113 during the charging and discharging process, and the higher the heat generation in the area of the first part 112a close to the second part 112b.

In summary, the smaller value of d1/(K·W) results in more heat generated by the conductive layer 112 during charging and discharging, higher temperature, faster aging of the active material layer 113 applied on the conductive layer 112, and thus the faster decrease in capacity of the battery cell 7. If the value of d1/(K·W) is too small, the temperature of the electrode plate 11 is too high under the condition of high-rate charging and discharging, causing the rapid aging of the active material layer 113, so the battery cell 7 cannot meet the service life requirement, or even safety issues may be raised.

After in-depth research and experiments, the inventors has found that limiting the value of d1/(K·W) to be greater than or equal to 0.001 J/(Ω·mm⁴·°C) leads to the reduction of the heat generated by the electrode plate 11 during charging and discharging, the reduced temperature of the battery cell 7, makes the battery cell 7 suitable for high-rate charge and discharge conditions, ensures the cycle life of the battery cell 7 and reduces safety risks.

The larger the d1 value is, the larger the volume and weight of the conductive layer 112 are, and the lower the energy density of the battery cell 7 is. The smaller the K value, the higher the current carrying capability of the conductive layer 112; the higher the K value, and the smaller the need of the electrode plate 11 for the thickness of the conductive layer 112. The smaller the W value, the smaller the current on the conductive layer 112, and the smaller the need of the Electrode plate 11 for the thickness of the conductive layer 112.

If d1/(K·W) is too large, the thickness d1 of the conductive layer 112 will be overdesigned, resulting in low energy density of the battery cell 7.

Through in-depth research and experiments, the inventors have found that limiting the value of d1/(K·W) to be less than or equal to 0.0075 J/(Ω·mm⁴·°C) can reduce the thickness of the conductive layer 112 while meeting the requirements of the current carrying capability and heat generation of the conductive layer 112, and increase the energy density of battery cell 7, and extend the cycle life of battery cell 7.

In some embodiments, the conductive layer 112 may be copper foil, aluminum foil or nickel foil. For example, the K value of copper foil is 0.0050 Ω·mm⁴·°C/J, the K value of aluminum foil is 0.0120 Ω·mm⁴·°C/J, the K value of nickel foil is 0.0167 Ω·mm⁴·°C/J.

In some embodiments, the value of d1/(K·W) is 0.001 J/(Ω·mm⁴·°C), 0.002 J/(Ω·mm⁴·°C), 0.003 J/(Ω·mm⁴·°C), 0.005 J/(Ω·mm⁴·°C), 0.007 J/(Ω·mm⁴·°C) or 0.0075 J/(Ω·mm⁴·°C).

In some embodiments, d1, W and K satisfy: 0.002 J/(Ω·mm⁴·°C)≤d1/(K·W)≤0.003 J/(Ω·mm⁴·°C).

In some embodiments, d1 is 0.5 µm-5 µm. Optionally, d1 is 0.5 µm, 1 µm, 2 µm, 3 µm, 4 µm or 5 µm.

In some embodiments, the electrode plate 11 further comprises a tab 1114, which is welded to the second part 112b to form a first welding portion. In the first direction X, the end of the tab 114 facing away from the active material layer 113 protrudes from the second part 112b.

In the thickness direction Z of the electrode plate 11, a part of the tab 114 overlaps the second part 112b; the part of the tab 114 that overlaps with the second part 112b is welded to the second part 112b and forms the first welding portion 115.

The tab 114 can be used to lead out the current on the second part 112b.

The part of the tab 114 protruding from the second part 112b in the first direction X can be used for connecting with the electrode lead-out structure.

In some embodiments, the tab 114 has a thickness of is d2, and d2 is greater than d1. The thickness of the tab 114 is greater than that of the conductive layer 112, so as to improve the current carrying capability of the tab 114.

In some embodiments, d2 is 1 µm-100 µm.

The smaller d2 is, the smaller the current carrying area of the tab 114 is, and the weaker the current carrying capability is. The larger d2 is, the larger the volume and weight of the tab 114 is, the more heat generated by the welding of the tab 114 and the conductive layer 112, and the more prone to poor welding between the tab 114 and the conductive layer 112. The inventors has found that by limiting the value of d2 to 1 µm-100 µm, the tab can meet the current carrying requirement meanwhile reducing the heat generated by the tab 114 during welding.

In some embodiments, two conductive layers 112 are provided on two sides of the insulating substrate 111, respectively. The tab 114 comprises a first tab 114a and a second tab 114b, and the first tab 114a and the second tab 114b are welded to the second parts 112b of the two conductive layers 112, respectively. The first tab 114a and the second tab 114b are used to lead out the current on the two conductive layers 112, respectively.

The aforementioned d2 refers to the thickness of a single tab 114. For example, the thicknesses of the first tab 114a and the second tab 114b are both d2.

In the first direction X, the size of the first tab 114a and the size of the second tab 114b may be the same or different. In some embodiments, the end of the first tab 114a facing away from the active material layer 113 is flush with the end of the second tab 114b facing away from the active material layer 113. In some other embodiments, the end of the first tab 114a away from the active material layer 113 protrudes beyond the second tab 114b, and the second tab 114b is bent toward the first tab 114a and connected to the first tab 114a.

In some embodiments, the first tab 114a is welded to the corresponding conductive layer 112 to form a first welding subsection, and the second tab 114b is welded to the corresponding conductive layer 112 to form a second welding subsection. The first welding portion 115 comprises a first welding subsection and a second welding subsection.

In some embodiments, the insulating substrate 111 separates the first welding subsection from the second welding subsection. In some other embodiments, a part of the insulating substrate 111 is welded through, and the first welding subsection and the second welding subsection are directly connected into one body.

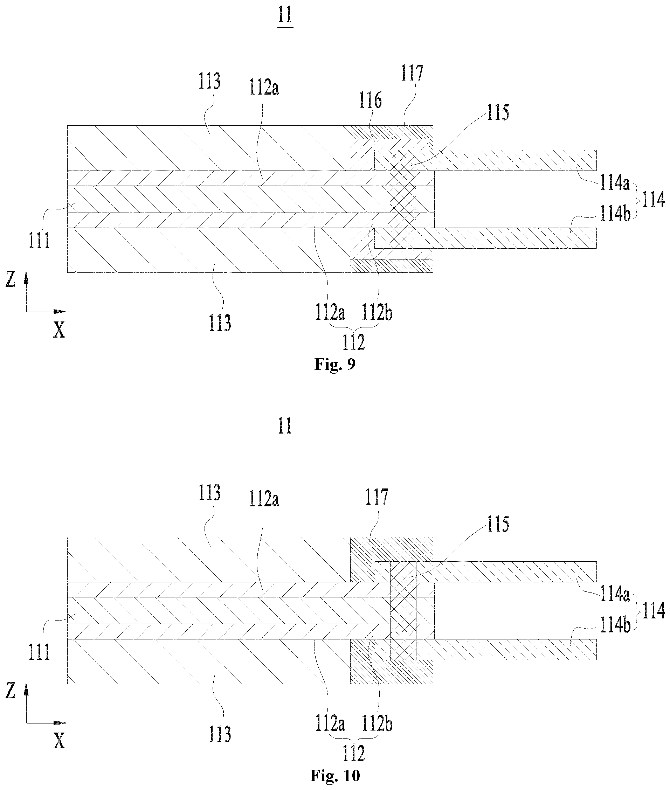

Fig. 9 is a cross-sectional schematic diagram of an electrode plate provided by some embodiments of the present application.

As shown in Fig. 9, in some embodiments, the electrode plate 11 further comprises an adhesive layer 116 connected to the tab 114 and covering at least part of the first welding portion 115.

The adhesive layer 116 may cover a part of the first welding portion 115 or may cover the entire first welding portion 115.

The adhesive layer 116 may be applied only on the tab 114, or may be applied on the conductive layer 112 and the tab 114 at the same time.

Some particles remain on the first welding portion 115, and when the battery cell 7 is subjected to an external impact, these particles may fall into the inside of the electrode assembly, causing a risk of short circuit. The adhesive layer 116 in the embodiment can fix at least part of the particles on the first welding portion 115, thereby reducing the risk of particles falling into the electrode assembly and improving safety.

In some embodiments, the adhesive layer 116 is formed by curing a colloid. For example, the colloid comprises an adhesive, and the adhesive may comprise at least one of epoxy resin, acrylate, and styrene-butadiene rubber.

In some embodiments, the colloid comprises ceramic particles, and the ceramic particles may comprise at least one of boehmite, silica, and zirconia. The ceramic particles may enhance the puncture strength and insulation of the adhesive layer 116.

In some embodiments, the colloid comprises a color identifying agent, such as charcoal, Prussian blue, and the like.

In some embodiments, the colloid has a viscosity of 1000 MPa s. The colloid has good fluidity during coating, and can cover the uneven area of the first welding portion 115, reducing the risk of holiday (missing coating).

In some embodiments, the adhesive layer 116 has a thickness of 0.01 mm-0.1 mm. The adhesive layer 116 has good toughness and strength, and it is not easy to fall off during the winding and forming process of the electrode assembly 10.

In some embodiments, a part of the adhesive layer 116 is located between the active material layer 113 and the tab 114 in the first direction X, applied on the second part 112b, and connected to the active material layer 113.

During the forming process of the electrode plate 11, it is generally necessary to roll the active material layer 113 to increase the compaction density of the active material layer 113. During rolling, the first part 112a is stressed but the second part 112b is not stressed, which causes stress concentration to easily occur at the joint between the first part 112a and the second part 112b and leads to risk of cracking at the joint between the first part 112a and the second part 112b.

The adhesive layer 116 is connected to the active material layer 113, and can cover the connection between the first part 112a and the second part 112b, reduce the risk of cracking of the conductive layer 112, and ensure the current carrying capability of the conductive layer 112. The adhesive layer 116 is also able to connect the tab 114 to the conductive layer 112 and the active material layer 113, thereby reducing the risk of detachment of the tab 114.

In some embodiments, the electrode plate 11 further comprises an insulating layer 117, and at least part of the insulating layer 117 is located on a side of the adhesive layer 116 away from the first welding portion 115 and is connected to the adhesive layer 116.

The insulating layer 117 can protect the adhesive layer 116, reduce the risk of short circuit caused by the welding portion piercing the adhesive layer 116, and thus improve safety. The insulating layer 117 can also improve the insulation of the electrode plate 11 and reduce the risk of short circuit caused by lap joint between the positive and negative electrode plates. The adhesive layer 116 is also able to connect the insulating layer 117 to the tab 114 to reduce the risk of detachment of the insulating layer 117.

In some embodiments, the insulating layer 117 completely covers the adhesive layer 116, so as to reduce the exposed area of the adhesive layer 116 and reduce the risk of separation of the adhesive layer 116 from the first welding portion 115 during immersion in the electrolyte.

In this embodiment, "cover" and "covering" refer to covering in the thickness direction Z, that is, the insulating layer 117 completely covers the adhesive layer 116 in the thickness direction Z of the electrode plate 11.

In some embodiments, both the insulating layer 117 and the adhesive layer 116 comprise an adhesive, and the weight ratio of the adhesive in the insulating layer 117 to the insulating layer 117 is N1, and the weight ratio of the adhesive in the adhesive layer 116 to the adhesive layer 116 is N2, and N1 is smaller than N2.

The amount of the adhesive in the adhesive layer 116 is relatively high, which allows better bonding to the first welding portion 115 and reduces the risk of separation of the adhesive layer 116 from the first welding portion 115. The insulating layer 117 is not necessarily connected with the first welding portion 115, and the insulating layer can contain less adhesive, so that the insulating layer 117 can be provided with more high-strength materials to improve the overall strength of the insulating layer 117.

In some embodiments, the insulating layer 117 is formed by curing an insulating slurry. The insulating slurry may comprise ceramic particles and an adhesive, and the ceramic particles may comprise at least one of alumina, silicon oxide and zirconia, and the adhesive comprises at least one of polyvinylidene fluoride (PVDF) and polytetrafluoroethylene (PTFE).

In some embodiments, the insulating slurry has a viscosity of 3000 MPa·s-10000 MPa s.

In some embodiments, the viscosity of the insulating slurry used to prepare the insulating layer 117 is greater than the viscosity of the colloid used to prepare the adhesive layer 116. The low-viscosity colloid has relatively good fluidity during coating and molding, so as to cover the uneven area of the first welding portion 115 and reduce the risk of holiday (missing coating); the high-viscosity insulating slurry may have relatively high strength after molding, so as to reduce the risk of the insulating layer 117 being pierced.

In some embodiments, the insulating layer 117 has a thickness of 0.005 mm-0.5 mm.

In some embodiments, the insulating layer 117 further comprises a dispersant, such as sodium carboxymethyl cellulose.

In some embodiments, in the first direction X, the part of the tab 114 protruding beyond the conductive layer 112 is not coated with an insulating layer 117.

The part of the tab 114 protruding beyond the conductive layer 112 is used to connect with the electrode lead-out structure, and if the insulating layer 117 is applied to the part of the tab 114 protruding beyond the conductive layer 112, it may interfere with the connection between the tab 114 and the current lead-out structure. Therefore, optionally, the part of the tab 114 protruding beyond the conductive layer 112 is not coated with the insulating layer 117.

In some embodiments, the electrode plate 11 may be molded according to the following steps: providing an insulating substrate 111 and a conductive layer 112, wherein the conductive layer 112 is arranged on the surface of the insulating substrate 111; applying an active slurry on the surface of the conductive layer 112 away from the insulating substrate 111, an active material layer 113 is formed after the active slurry is solidified; welding the tab 114 to the part of the conductive layer 112 that is not coated with the active material layer 113, to form the first welding portion 115; applying a colloid on the conductive layer 112 and the tab 114, so that the colloid covers the first welding portion 115; applying an insulating slurry on the colloid.

The adhesive layer 116 is formed after the colloid is solidified, and the insulating layer 117 is formed after the insulating slurry is solidified.

Fig. 10 is a cross-sectional schematic diagram of an electrode plate provided by some other embodiments of the present application.

As shown in Fig. 10, in some embodiments, the electrode plate 11 further comprises an insulating layer 117 connected to the tab 114 and the active material layer 113, and the insulating layer 117 covers at least part of the first welding portion 115.

The insulating layer 117 can fix at least part of the particles on the first welding portion 115, thereby reducing the risk of particles falling into the electrode assembly 10 and improving safety.

In some embodiments, the adhesive layer may be omitted in the electrode plate 11, and the insulating layer 117 is directly bonded on the first welding portion 115.

In some embodiments, the insulating layer 117 comprises ceramic particles and an adhesive, and the weight ratio of the adhesive to the insulating layer 117 is greater than or equal to 0.1.

The amount of the adhesive in the insulating layer 117 is relatively high, which allows better bonding to the first welding portion 115 and reduces the risk of separation of the insulating layer 117 from the first welding portion 115.

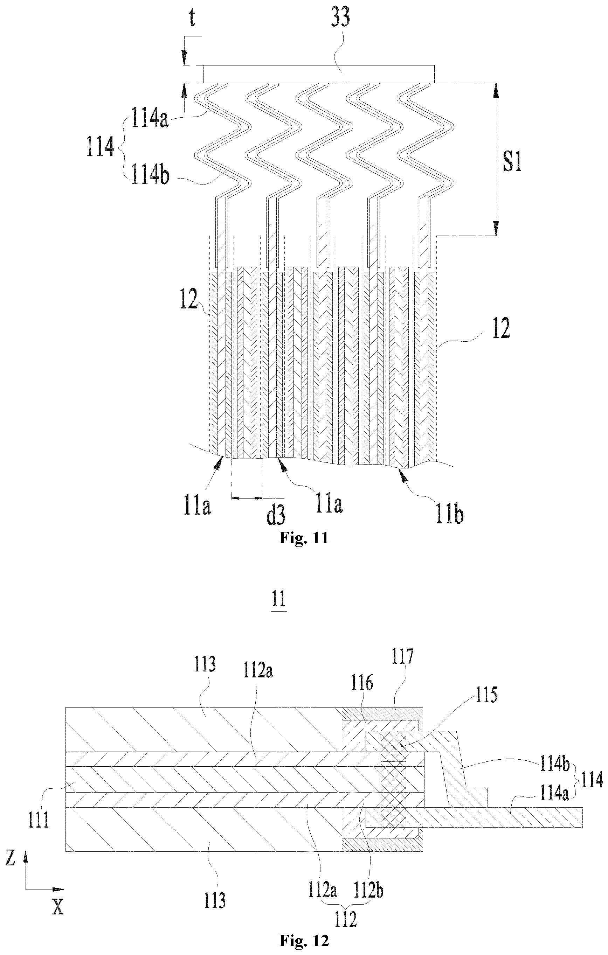

Fig. 11 is a partial structural schematic diagram of a battery cell provided by some embodiments of the present application.

With reference to Fig. 4 to Fig. 11 together, the embodiments of the present application further provide a battery cell 7, comprising a casing 20, an electrode assembly 10, and an electrode lead-out structure 30. The electrode assembly 10 is accommodated within the casing 20. The electrode assembly 10 comprises the electrode plate 11 according to any of the embodiments as described above. The electrode lead-out structure 30 is arranged on the casing 20 and connected to the tab 114. The electrode lead-out structure 30 is used to lead out the electric energy generated by the electrode assembly 10.

In some embodiments, two conductive layers 112 are provided on two sides of the insulating substrate 111, respectively. The tab 114 comprises a first tab 114a and a second tab 114b, and the first tab 114a and the second tab 114b are welded to the second parts 112b of the two conductive layers 112, respectively.

The first tab 114a and the second tab 114b are used to lead out the current on the two conductive layers 112, respectively.

In some embodiments, the electrode lead-out structure 30 has a connecting portion 33, and in the first direction X, the connecting portion 33 is located on the side of the first tab 114a away from the active material layer 113, and the connecting portion 33 abuts against and is welded to the first tab 114a, and abuts against and is welded to the second tab 114b. The connecting portion 33 has a thickness of t, and the size of the first tab 114a in the flattened state protruding beyond the first welding portion 115 along the first direction X is h2, and t and h2 satisfy: 2.5≤h2/t≤10. The size of the second tab 114b in the flattened state protruding beyond the first welding portion 115 along the first direction X is h3, and t and h3 satisfy: 2.5≤h3/t≤10.

The connecting portion 33 is a part where the electrode lead-out structure 30 abuts against the first tab 114a and the second tab 114b. For example, the connecting portion 33 may be the current collecting member 32, and may also be a part of the current collecting member 32. Optionally, the connecting portion 33 has a flat plate structure.

The first tab 114a can be flattened, bent or processed by other processes to form a relatively dense end surface 114c, and the end surface 114c may be used to abut against and be weld with the connecting portion 33.

The flattened state of the first tab 114a refers to returning the first tab 114a to a flat and straight state. For example, the electrode assembly 10 can be disassembled first and the electrode plate 11 can be unfolded as a whole, and then the first tab 114a can be flattened again by using equipment, and then the value of h2 can be measured.

Likewise, the flattened state of the second tab 114b refers to returning the second tab 114b to a flat and straight state. For example, the electrode assembly 10 can be disassembled first and the pole piece 11 can be unfolded as a whole, and then the second tab 114b can be flattened again by using equipment, and then the value of h3 can be measured.

The larger h2 is, the larger the part of the first tab 114a that can be welded to the connecting portion 33 is, but the space occupied by the first tab 114a is also larger; the smaller the value of t, the less heat generated by welding, the lower the connection strength between the first tab 114a and the connecting portion 33, the smaller the current carrying capability of the connecting portion 33. If h2/t is too large, the space occupied by the first tab 114a will be large, the energy density of the battery cell 7 will be insufficient, and the risk of failure of the connection between the connecting portion 33 and the first tab 114a will be high.

The smaller h2 is, the smaller the part of the first tab 114a that can be welded to the connecting portion 33 is, but the space occupied by the first tab 114a is also smaller; the larger the value of t, the more heat generated by welding, the more heat transferred to the first tab 114a and separator 12, the higher the risk of the burned tab 114 and separator 12. If h2/t is too small, the risk of the burned first tab 114a and separator 12 is relatively high.

In view of this, in the embodiments, the value of h2/t may be limited to 2.5-10, to ensure the connection strength between the connecting portion 33 and the first tab 114, reduce the risk of the first tab 114 being melted through, and increase the energy density. Optionally, the value of h2/t is limited to 5-7.5.

Similarly, in the embodiments, the value of h3/t may be limited to 2.5-10, to ensure the connection strength between the connecting portion 33 and the second tab 114b, reduce the risk of the second tab 114b being melted through, and increase the energy density. Optionally, the value of h3/t is limited to 5-7.5.

In some embodiments, the value of h2/t may be 2.5, 4, 5, 7.5, 9 or 10. In some embodiments, the value of h3/t may be 2.5, 4, 5, 7.5, 9 or 10.

In some embodiments, the connecting portion 33 is welded to the first tab and the second tab to form a second welding portion.

In some embodiments, the electrode plate 11 is wound in a plurality of turns (cycles). In the radial direction of the electrode assembly 10, the distance between two adjacent turns (cycles) of the electrode plate 11 is d3, and 0.2mm≤d3≤0.4mm.
d3 is the distance between two adjacent turns (cycles) of the same electrode plate 11 in the radial direction.

The electrode plate 11 (such as the first electrode plate 11a) is wound in a plurality of turns (cycles), and correspondingly, the tabs 114 are also wound in multiple turns (cycles). The higher the value of d3, the higher the distance between two adjacent turns (cycles) of tabs 114, and the higher the risk of laser passing between the tabs 114 during the welding of the tabs 114 and the electrode lead-out structure. If the value of d3 is too high, the separator 12 of the electrode assembly 10 may be burned by the laser, causing a safety risk. Therefore, in the embodiments, the value of d3 may be limited to be less than or equal to 0.4 mm to improve safety.

Another electrode plate 11 with opposite polarity and a separator 12 need to be arranged between two adjacent turns of one electrode plate 11; for example, a second electrode plate 11b and two layers of separators 12 need to be arranged between two adjacent turns of the first electrode plate 11a. If the value of d3 is too small, the another electrode plate 11 and separator 12 will be restricted. Therefore, in the embodiments, the value of d3 may be limited to be greater than or equal to 0.2 mm to provide space for structures such as separators.

In some embodiments, d3 is 0.2 mm, 0.25 mm, 0.3 mm, 0.35 mm or 0.4 mm.

In some embodiments, the electrode lead-out structure 30 has a connecting portion 33, and in the first direction X, the connecting portion 33 is located on the side of the tab 114 away from the active material layer 113, and the connecting portion 33 abuts against and is welded to the tab 114. The electrode assembly 10 also includes a separator 12, which is laminated and wound with the electrode plates 11. In the first direction X, the minimum distance between the surface of the connecting portion 33 abutting against the first tab 114a and the separator 12 is S1, the thickness of the connecting portion 33 is t, and S1≥0.75t.

The higher the value of t, the greater the heat generated by the welding connecting portion 33 and the first tab 114a; the smaller S1, the shorter the heat conduction path between the separator 12 and the connecting portion 33, and the more the heat conducted to the separator 12, resulting in too high risk of the separator 12 being burned. In the embodiments, S1 may be limited to be greater than or equal to 0.75t, so as to reduce the heat conducted to the separator 12 and reduce the risk of the separator 12 being burned.

In some embodiments, S1≥1.5t.

In some embodiments, the tab 114 is wound in a plurality of turns (cycles) along the winding direction V, and the end of the tab 114 in a plurality of turns (cycles) facing away from the active material layer 113 is flattened to form an end surface 114c, and the electrode lead-out structure 30 is welded to the end surface 114c.

In the embodiments of the present application, the tab 114 may be flattened so that the end area of the tab 114 away from the active material layer 113 is collected and gathered together; The flattening treatment forms a dense end surface 114c at the end of the tab 114 away from the active material layer 113, reducing the gap and facilitating the connection between the tab 114 and the electrode lead-out structure 30.

In some embodiments, the electrode assembly 10 is generally cylindrical.

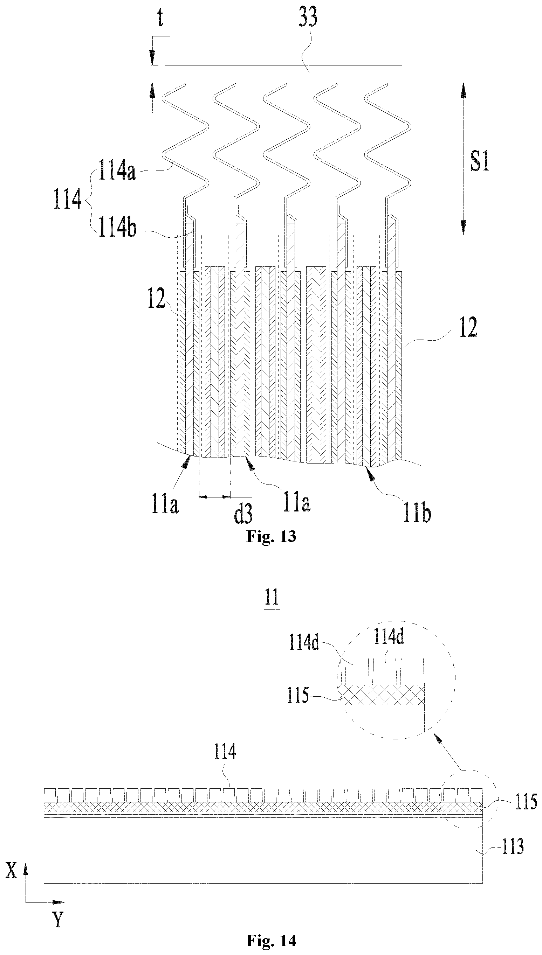

Fig. 12 is a cross-sectional schematic diagram of an electrode plate provided by yet some embodiments of the present application; Fig. 13 is a partial structural schematic diagram of a battery cell provided by some embodiments of the present application.

In some other embodiments, as shown in Fig. 12 and Fig. 13, in the first direction X, the end of the first tab 114a away from the active material layer 113 protrudes beyond the second tab 114b, and the second tab 114b is bent toward the first tab 114a and connected to the first tab 114a. The electrode lead-out structure 30 has a connecting portion 33, and in the first direction X, the connecting portion 33 is located on the side of the first tab 114a away from the active material layer 113, and the connecting portion 33 abuts against and is welded to the first tab 114a. The connecting portion 33 has a thickness of t, and the size of the first tab 114a in the flattened state protruding beyond the first welding portion 115 along the first direction X is h2, and t and h2 satisfy: 5≤h2/t≤20.

The larger h2 is, the larger the part of the first tab 114a that can be welded to the connecting portion 33 is, but the space occupied by the first tab 114a is also larger; the smaller the value of t, the less heat generated by welding, the lower the connection strength between the first tab 114a and the connecting portion 33, the smaller the current carrying capability of the connecting portion 33. If h2/t is too large, the space occupied by the first tab 114a will be large, the energy density of the battery cell 7 will be insufficient, and the risk of failure of the connection between the connecting portion 33 and the first tab 114a will be high.

The smaller h2 is, the smaller the part of the first tab 114a that can be welded to the connecting portion 33 is, but the space occupied by the first tab 114a is also smaller; the larger the value of t, the more heat generated by welding, the more heat transferred to the first tab 114a and separator 12, the higher the risk of the burned tab 114 and separator 12. If h2/t is too small, the risk of the burned first tab 114a and separator 12 is relatively high.

In the embodiments, the second tab 114b is not welded to the connecting portion 33, so the value of h2/t is limited to 5-20, to ensure the connection strength between the connecting portion 33 and the first tab 114a, reduce the risk of the first tab 114a being melted through, and increase the energy density. Optionally, the value of h2/t is 10-15.

Compared with the solution in which the first tab 114a and the second tab 114b are welded to the connecting portion 33 at the same time, the solution in which only the first tab 114a is welded to the connecting portion 33 requires a larger h2 of the first tab 114a.

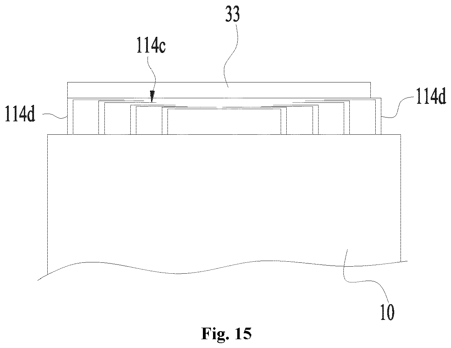

Fig. 14 is a schematic structural diagram of an electrode plate in the unfolded state provided by some further embodiments of the present application; Fig. 15 is a partial schematic diagram of a battery cell 7 provided by some embodiments of the present application.

In some embodiments, as shown in Fig. 14 and Fig. 15, the tab 114 includes a plurality of tab portions 114d arranged at intervals along a second direction Y, and the second direction Y is perpendicular to the first direction X and the thickness direction Z of the electrode plate 11. In the first direction X, the tab portions 114d protrude from the second part 112b.

For example, the first tab 114a comprises a plurality of tab portions 114d, and the second tab 114b comprises a plurality of tab portions 114d.

In the embodiments, the tab 114 is divided into a plurality of separate tab portions 114d, which facilitates the bending of the tab portions 114d after the electrode plate 11 is wound.

In some embodiments, the electrode plate 11 is wound in a plurality of turns (cycles) along the winding direction V. The tab 114 comprises a plurality of tab portions 114d arranged at intervals along the winding direction V, the plurality of tab portions 114d are bent toward the winding center of the electrode plate 11 to form an end surface 114c, and the electrode lead-out structure 30 is welded to the end surface 114c.

In the flattened state of the electrode plate 11, the plurality of tab portions 114d are arranged along the second direction Y. After the electrode plate 11 is wound, a plurality of tab portions 114d are arranged along the winding direction V.

The tab portions 114d are bent towards the winding center of the electrode plate 11 to cover the gap between two adjacent turns of the electrode plate 11, and forms a dense end surface 114c, which is convenient for welding of the electrode lead-out structure 30 and reduces the risk of laser leakage.

In some embodiments of the present application, a battery is provided, comprising a plurality of battery cells according to any one of the embodiments as described above.

In some embodiments of the present application, an electrical device is provided, comprising a battery cell according to any one of the embodiments as described above, and the battery cell is used to provide electric energy for the electrical device.

In some embodiments of the present application, as shown in Figs. 6 to 9, the embodiments of the present application provide an electrode plate 11, comprising an insulating substrate 111, a conductive layer 112, an active material layer 113 and a tab 114. Two conductive layers 112 are provided on two surfaces of the insulating substrate 111, respectively. The active material layer 113 is applied on the surface of the conductive layer 112 away from the insulating substrate 111, the conductive layer 112 comprising a first part 112a coated with the active material layer 113 and a second part 112b not coated with the active material layer 113, and the first part 112a and the second part 112b are arranged along the first direction X.

The tab 114 comprises a first tab 114a and a second tab 114b, and the first tab 114a and the second tab 114b are welded to the second parts 112b of the two conductive layers 112, respectively. The first tab 114a and the second tab 114b are used to lead out the current on the two conductive layers 112, respectively. The first tab 114a is welded to the corresponding conductive layer 112 to form a first welding subsection, and the second tab 114b is welded to the corresponding conductive layer 112 to form a second welding subsection. The first welding portion 115 comprises a first welding subsection and a second welding subsection.

The electrode plate 11 further comprises an adhesive layer 116 and an insulating layer 117, and the adhesive layer 116 is connected to the tab 114 and covers at least part of the first welding portion 115. At least part of the insulating layer 117 is located on a side of the adhesive layer 116 away from the first welding portion 115 and is connected to the adhesive layer 116.

The conductive layer 112 has a resistivity of ρ1, a specific heat capacity of C, a density of ρ2, and a constant K=ρ1/(C·ρ2). The conductive layer 112 has a thickness of d1, the first part 112a has a size of W along the first direction X, and d1, W and K satisfy: 0.001 J/(Ω·mm⁴·°C)≤d1/(K·W)≤0.0075 J/(Ω·mm⁴·°C).

The application will be further elaborated below in conjunction with specific embodiments.

In order to make the object, technical solution, and technical effects of the present application apparent, the following further describes the present application in detail with reference to the embodiments. However, it should be understood that the embodiments described in the present application are only for explaining the present application, and are not intended to limit the application. In the case that the specific experimental conditions or operating conditions that are not indicated in Examples, conventional conditions or the conditions recommended by the material supplier are applied.

Example 1 was prepared according to the following steps:
(i) The positive electrode active material NCM523, a conductive agent acetylene black, and a binder PVDF at a mass ratio of 96:2:2 were mixed and added into the solvent NMP, and stirred under the action of a vacuum mixer until the system was uniform, to obtain a positive electrode slurry; The positive electrode slurry was evenly applied on a first current collector, dried at room temperature, transferred to an oven for further drying, and then subjected to cold pressing, slitting, and cutting, to obtain the first electrode plate. After the positive electrode slurry was solidified, an active material layer was formed.
(ii) The negative electrode active material of graphite or graphite and other active materials in different mass ratios, a conductive agent acetylene black, a thickener CMC, and a binder SBR in a mass ratio of 96.4:1:1.2:1.4 were mixed and added into the deionized water as solvent, stirred under the action of a vacuum mixer until the system was uniform, to obtain a negative electrode slurry; The negative electrode slurry was evenly applied on a second current collector, dried at room temperature, transferred to an oven for further drying, and then subjected to cold pressing, slitting, and cutting, to obtain the second electrode plate.
(iii) Ethylene carbonate (EC), ethyl methyl carbonate (EMC), and diethyl carbonate (DEC) in a volume ratio of 1:1:1 were mixed to obtain an organic solvent, and then a fully dried lithium salt LiPF6 was dissolved in the mixed organic solvent, to prepare an electrolyte solution with a concentration of 1 mol/L.
(iv) A 12 µm thick polypropylene film was used as a separator.
(v) The first electrode plate, the separator and the second electrode plate were laminated together and wound into a cylindrical shape.
(vi) The electrode assembly was put into the cylindrical casing, and then subjected to the processes including liquid injection, standing, chemical formation, and shaping, to obtain a battery cell.

In step (i), referring to Fig. 8, the first current collector included an insulating substrate 111 and a conductive layer 112 disposed on the surface of the insulating colloid; the conductive layer 112 was made of aluminum foil having a K value of 0.0120 Ω·mm⁴·°C/J, the thickness of 0.001 mm, and a width W of the region coated with the positive electrode slurry of 68.5 mm.

In step (vi), the battery cell was cylindrical, with a diameter of 46 mm and a height of 95 mm.

The battery cell prepared in Example 1 were subjected to energy density test, temperature test and cycle performance test.

Energy density test: In the environment at 25°, a battery cell is discharge from the upper limit voltage at a rate of 0.33C, until it reaches the lower limit voltage, and the capacity exerted is the capacity of the battery cell; The energy density G of the battery cell is obtained by dividing the capacity by the weight of the battery cell.

Temperature test: a battery cell is subjected to fast charging, and the highest temperature Q of the active material layer of the first electrode plate is detected. Fast charging refers to charging a battery cell from 0 to 80% within 25 minutes. During the preparation of a battery cell, a temperature sensor can be built inside the battery cell, and an opening is opened on the casing to lead out the lead wire of the sensor. The temperature sensor can detect the temperature of the active material layer in real time.

Cycle performance test: Under normal temperature environment, a battery cell is charged at a rate of 1C, discharged at a rate of 1C, and a full charge and discharge cycle test is performed until the capacity of the battery cell decays to 80% of the initial capacity. Number of cycles of the battery cell is recorded.

Example 2: The preparation method and test methods of the battery cell in Example 2 were the same as those in Example 1, except that d1 was 0.0008 mm.

Example 3: The preparation method and test methods of the battery cell in Example 3 were the same as those in Example 1, except that d1 was 0.0015 mm.

Example 4: The preparation method and test methods of the battery cell in Example 4 were the same as those in Example 1, except that d1 was 0.002 mm.

Example 5: The preparation method and test methods of the battery cell in Example 5 were the same as those in Example 1, except that d1 was 0.0025 mm.

Example 6: The preparation method and test methods of the battery cell in Example 6 were the same as those in Example 1, except that d1 was 0.003 mm.

Example 7: The preparation method and test methods of the battery cell in Example 7 were the same as those in Example 1, except that d1 was 0.0035 mm.

Example 8: The preparation method and test methods of the battery cell in Example 8 were the same as those in Example 1, except that d1 was 0.004 mm.

Example 9: The preparation method and test methods of the battery cell in Example 9 were the same as those in Example 1, except that d1 was 0.0045 mm.

Example 10: The preparation method and test methods of the battery cell in Example 10 were the same as those in Example 1, except that d1 was 0.005 mm.

Example 11: The preparation method and test methods of the battery cell in Example 11 were the same as those in Example 1, except that d1 was 0.0062 mm.

Comparative Example 1: The preparation method and test methods of the battery cell in Comparative Example 1 were the same as those in Example 1, except that d1 was 0.0007 mm.

Comparative Example 2: The preparation method and test methods of the battery cell in Comparative Example 2 were the same as those in Example 1, except that d1 was 0.0065 mm.

Comparative Example 3: The preparation method and test methods of the battery cell in Comparative Example 3 were the same as those in Example 1, except that d1 was 0.0074 mm.

The evaluated results of Examples 1 to 11 and Comparative Examples 1 to 3 were shown in Table 1.

**Table 1**

| | d1 (mm) | K (Ω·mm⁴ ·°C/J) | W (mm) | d1/(K·W) (J/(Ω·mm⁴·°C)) | Energy Density G (Wh/kg) | Temperature Q (°C) | Number of cycles |
|---|---|---|---|---|---|---|---|
| Example 1 | 0.001 | 0.012 | 68.5 | 0.0012 | 287.0 | 58 | 800 |
| Example 2 | 0.0008 | 0.012 | 68.5 | 0.001 | 287.3 | 62 | 680 |
| Example 3 | 0.0015 | 0.012 | 68.5 | 0.0018 | 286.1 | 57.5 | 800 |
| Example 4 | 0.002 | 0.012 | 68.5 | 0.0024 | 285.3 | 56.9 | 805 |
| Example 5 | 0.0025 | 0.012 | 68.5 | 0.0030 | 284.4 | 56.4 | 810 |
| Example 6 | 0.003 | 0.012 | 68.5 | 0.0036 | 283.5 | 55.9 | 805 |
| Example 7 | 0.0035 | 0.012 | 68.5 | 0.0043 | 282.6 | 55.5 | 813 |
| Example 8 | 0.004 | 0.012 | 68.5 | 0.0049 | 281.8 | 55.1 | 815 |
| Example 9 | 0.0045 | 0.012 | 68.5 | 0.0055 | 280.9 | 54.6 | 820 |
| Example 10 | 0.005 | 0.012 | 68.5 | 0.0061 | 279.4 | 54.2 | 822 |
| Example 11 | 0.0062 | 0.012 | 68.5 | 0.0075 | 278.5 | 53.5 | 830 |
| Comparative Example 1 | 0.0007 | 0.012 | 68.5 | 0.0009 | 287.5 | 64 | 600 |
| Comparative Example 2 | 0.0065 | 0.012 | 68.5 | 0.008 | 277.7 | 52.8 | 836 |
| Comparative Example 3 | 0.0074 | 0.012 | 68.5 | 0.009 | 276.8 | 52.1 | 844 |

With reference to Examples 1-11 and Comparative Examples 1-3, the smaller value of d1/(K·W) results in more heat generated by the conductive layer during charging and discharging, higher temperature, faster aging of the active material layer applied on the conductive layer, and thus the faster decrease in capacity of the battery cell. The higher d1/(K·W) will result in the higher weight of the conductive layer and lower energy density of battery cell. In Examples of the present application, limiting the value of d1/(K·W) to 0.001 J/(Ω·mm⁴·°C)- 0.0075 J/(Ω·mm⁴·°C) balances the energy density and cycle performance of battery cell.

It should be noted that, in the case of no conflict, the embodiments in the present application and the features in the embodiments can be combined with each other.

Finally, it should be noted that: the above embodiments are only used to illustrate the technical solutions of the present application, rather than limiting them; although the present application has been described in detail with reference to the foregoing embodiments, those of ordinary skill in the art should understand that: modifications can still be made to the technical solutions described in the foregoing embodiments, or equivalent replacements can still be made to some of the technical features, but these modifications or replacements do not make the essence of the corresponding resulting technical solutions deviate from the spirit and scope of the technical solutions of the various embodiments of the present application.

## Claims

1. An electrode plate, comprising
an insulating substrate;
a conductive layer, arranged on a surface of the insulating substrate;
an active material layer, applied on a surface of the conductive layer away from the insulating substrate, wherein the conductive layer comprises a first part coated with the active material layer and a second part not coated with the active material layer, and the first part and the second part are arranged along a first direction;
the conductive layer has a resistivity of ρ1, a specific heat capacity of C, a density of ρ2, and a constant K=ρ1/(C·ρ2);
the conductive layer has a thickness of d1, the first part has a size of W along the first direction, and d1, W and K satisfy: 0.001 J/(Ω·mm⁴·°C) ≤ d1/(K·W) ≤ 0.0075 J/(Ω·mm⁴·°C).

2. The electrode plate according to claim 1, wherein d1, W and K satisfy: 0.002 J/(Ω·mm⁴·°C) ≤d1/(K·W) ≤ 0.003 J/(Ω·mm⁴·°C).

3. The electrode plate according to claim 1 or 2, wherein d1 is 0.5 µm-5 µm.

4. The electrode plate according to any one of claims 1-3, further comprising a tab, wherein the tab is welded to the second part to form a first welding portion; and in the first direction, an end of the tab facing away from the active material layer protrudes from the second part.

5. The electrode plate according to claim 4, wherein the tab has a thickness of d2, and d2 is greater than d1.

6. The electrode plate according to claim 5, wherein d2 is 1 µm-100 µm.

7. The electrode plate according to any one of claims 4-6, further comprising an adhesive layer, wherein the adhesive layer is connected to the tab and covers at least part of the first welding portion.

8. The electrode plate according to claim 7, wherein a part of the adhesive layer is located between the active material layer and the tab in the first direction, applied on the second part, and connected to the active material layer.

9. The electrode plate according to claim 7 or 8, further comprising an insulating layer, wherein at least part of the insulating layer is located on a side of the adhesive layer away from the first welding portion and is connected to the adhesive layer.

10. The electrode plate according to claim 9, wherein both the insulating layer and the adhesive layer comprise an adhesive, and a weight ratio of the adhesive in the insulating layer to the insulating layer is N1, and a weight ratio of the adhesive in the adhesive layer to the adhesive layer is N2, and N1 is smaller than N2.

11. The electrode plate according to claim 9 or 10, wherein the insulating layer completely covers the adhesive layer.

12. The electrode plate according to any one of claims 4-6, further comprising an insulating layer, wherein the insulating layer is connected to the tab and the active material layer and covers at least part of the first welding portion.

13. The electrode plate according to claim 12, wherein the insulating layer comprises ceramic particles and an adhesive, and a weight ratio of the adhesive to the insulating layer is greater than or equal to 0.1.

14. The electrode plate according to any one of claims 9-13, wherein in the first direction, the part of the tab protruding from the conductive layer is not coated with an insulating layer.

15. The electrode plate according to any one of claims 4-14, wherein the tab comprises a plurality of tab portions arranged at intervals along a second direction, and the second direction is perpendicular to the first direction and the thickness direction of the electrode plate;
in the first direction, the tab portions protrude from the second part.

16. An battery cell, comprising
a casing;
an electrode assembly accommodated in the casing, wherein the electrode assembly comprises the electrode plate according to any one of claims 4-14; and
an electrode lead-out structure, arranged on the casing and connected to the tab.

17. The battery cell according to claim 16, wherein,
two conductive layers are provided on two sides of the insulating substrate, respectively;
the tab comprises a first tab and a second tab, and the first tab and the second tab are welded to the second parts of the two conductive layers, respectively.

18. The battery cell according to claim 17, wherein,
in the first direction, an end of the first tab away from the active material layer protrudes beyond the second tab, and the second tab is bent toward the first tab and connected to the first tab;
the electrode lead-out structure has a connecting portion, and in the first direction, the connecting portion is located on the side of the first tab away from the active material layer, and the connecting portion abuts against and is welded to the first tab;
the connecting portion has a thickness of t, and the first tab in the flattened state protruding beyond the first welding portion along the first direction has a size of h2, and t and h2 satisfy: 5≤h2/t≤20.

19. The battery cell according to claim 17, wherein the electrode lead-out structure has a connecting portion, and in the first direction, the connecting portion is located on the side of the first tab away from the active material layer, and the connecting portion abuts against and is welded to the first tab, and abuts against and is welded to the second tab;
the connecting portion has a thickness of t, and the first tab in the flattened state protruding beyond the first welding portion along the first direction has a size of h2, and t and h2 satisfy: 2.5≤h2/t≤10;
the second tab in the flattened state protruding beyond the first welding portion along the first direction has a size of h3, and t and h3 satisfy: 2.5≤h3/t≤10.

20. The battery cell according to claim 16-19, wherein, the electrode plate is wound in a plurality of turns;
in radial direction of the electrode assembly, a distance between two adjacent turns of the electrode plate is d3, and 0.2 mm≤d3≤0.4 mm.

21. The battery cell according to any one of claims 16-20, wherein the electrode lead-out structure has a connecting portion, and in the first direction, the connecting portion is located on the side of the first tab away from the active material layer, and the connecting portion abuts against and is welded to the tab;
the electrode assembly further comprises a separator, and the separator is laminated and wound with the electrode plates;
in the first direction, a minimum distance between a surface of the connecting portion abutting against the first tab and the separator is S1, the connecting portion has a thickness of t, and S1≥0.75t.

22. The battery cell according to any one of claims 16-21, wherein the tab is wound in a plurality of turns along the winding direction, and an end of the tab in a plurality of turns facing away from the active material layer is flattened to form an end surface, and the electrode lead-out structure is welded to the end surface.

23. The battery cell according to any one of claims 16-21, wherein the tab is wound in a plurality of turns along the winding direction; the tab comprises a plurality of tab portions arranged at intervals along the winding direction, and the plurality of tab portions are bent toward a winding center of the electrode plate to form an end surface, and the electrode lead-out structure is welded to the end surface.

24. A battery comprising the battery cell according to any one of claims 16-23.

25. An electrical device, comprising the battery cell according to any one of claims 16-23, and the battery cell is used to provide electric energy.
